(19) Europäisches Patentamt
European Patent Office
Office européen des brevets

(11) **EP 1 443 631 B1**

(12) **EUROPÄISCHE PATENTSCHRIFT**

(45) Veröffentlichungstag und Bekanntmachung des Hinweises auf die Patenterteilung:
**27.02.2008 Patentblatt 2008/09**

(51) Int Cl.:
*H02K 23/02* *(2006.01)*

(21) Anmeldenummer: **04100226.2**

(22) Anmeldetag: **23.01.2004**

(54) **Verfahren und Vorrichtung zur Kompensation der Anker-Reaktion eines rotierenden Erregers**

Method and device for compensating the armature reaction of a rotating exciter

Procédé et dispositif pour la compensation de la réaction de l'induit d'un bobinage d'excitation

(84) Benannte Vertragsstaaten:
**DE GB**

(30) Priorität: **01.02.2003 DE 10304022**

(43) Veröffentlichungstag der Anmeldung:
**04.08.2004 Patentblatt 2004/32**

(73) Patentinhaber: **Alstom Technology Ltd**
**5400 Baden (CH)**

(72) Erfinder: **Lacaze, Alain**
**90850, Essert (FR)**

(56) Entgegenhaltungen:
FR-A- 608 509          FR-A- 1 098 945
FR-A- 1 169 097        FR-A- 2 379 933
FR-A- 2 410 388        GB-A- 982 118
US-A- 3 109 978        US-A- 3 335 348
US-A- 3 541 370        US-A- 3 885 302

**Beschreibung**

TECHNISCHES GEBIET

Die vorliegende Erfindung betrifft ein Verfahren zur Kompensation des von einem Rotor induzierten Reaktionsfeldes, auch Anker-Reaktion genannt, bei welchem der Rotor in einem statischen magnetischen Feld in einem statischen äusseren Kern rotiert, und wobei der Rotor wenigstens zwei Leiter umfasst, welche im wesentlichen parallel zur Achse des Rotors angeordnet sind. Die vorliegende Erfindung bezieht sich ausserdem auf eine elektrische Maschine zur Durchführung eines derartigen Verfahrens sowie auf einen bürstenlosen Erreger zur Verwendung in einer solchen elektrischen Maschine.

STAND DER TECHNIK

Eine synchrone Maschine ist eine dynamoelektrische Maschine, welche als Motor zum Antrieb einer Welle oder irgend einer Last bei konstanter Geschwindigkeit verwendet werden kann, oder als Generator zur Erzeugung einer Spannung einer bestimmten Frequenz abhängig von der Geschwindigkeit der treibenden Welle. Wenn die Vorrichtung als synchroner Generator verwendet wird, ist es üblich, die Felderregung für den Rotor zum Beispiel über einen synchronen bürstenlosen Erreger zur Verfügung zu stellen. Der Erregergenerator konvertiert das Gleichstrom(DC)-Statorfeld in eine mehrphasige Wechselstrom(AC)-Anker-Spannung, welche über einen Satz von rotierenden Gleichrichtern gleichgerichtet wird, welche Gleichrichter auf oder innerhalb der treibenden Welle angeordnet sind, um die Gleichstromerregung für die Feldwicklungen des synchronen Generators, d.h. für den Rotor des Generators zur Verfügung zu stellen.

Mit anderen Worten ist ein rotierender Erreger ein umgekehrter Generator, bei welchem die Feldwicklung, mit Gleichstrom gespeist, an den statischen Teilen angeordnet ist. Der Anker befindet sich am rotierenden Teil und erzeugt eine Wechselspannung. Ein Satz von Dioden wird zur Gleichrichtung verwendet, um einen Gleichstrom zu erzeugen, der zur Anregung der Feldwicklung der synchronen Maschine, d.h. des Rotors des Generators, erforderlich ist.

Grössenordnungsmässig bewegt sich die von einem Erreger erzeugte Leistung im Bereich von 0.5 bis 2% der Nennleistung einer synchronen Maschine. Weil der rotierende Erreger ein Generator ist, könnte diese Leistung gleichermassen mit niedriger, mittlerer oder hoher Spannung zur Verfügung gestellt werden. Das Gleichgewicht zwischen Spannung respektive Strom wird gewählt, um der verfügbaren Dioden-Charakteristik möglichst gerecht zu werden. Prinzipiell kann die Limitierung in Bezug auf den Ausgangsstrom, infolge der verfügbaren Dioden, überwunden werden, indem zwei oder mehr Dioden parallel geschaltet werden. Dies resultiert aber eigentlich in einer starken Überladung an Dioden, und es besteht ein Bedarf, die Auslegung zu reduzieren.

Heutzutage werden Rotoren normalerweise bei Geschwindigkeiten von 3000 Umdrehungen pro Minute betrieben, was zu Strömen im Bereich von 2000 Ampere zur Anregung der Feldwicklung der synchronen Maschine führt. Normalerweise kann die synchrone Maschine nicht bei höheren Rotationsgeschwindigkeiten betrieben werden, dies infolge einer Anzahl von Begrenzungen, wie beispielsweise Instabilität der Welle sowie hohe Zentrifugalkräfte an den rotierenden Teilen. Bei der Stromerzeugung ist, für eine gegebene Leistung, eine Erhöhung der Umdrehungsgeschwindigkeit einer Turbine aber mit einer Reduktion der Grösse und der Kosten verbunden. Die Effizienz kann ebenfalls verbessert werden. So sind bereits Turbinen zur Stromerzeugung bis zu 70 Megawatt über Getriebe an Generatoren gekoppelt, um eine Betriebsweise bei höheren Rotationsgeschwindigkeiten zu erlauben.

Es ist wohlbekannt, dass, insbesondere bei hohen Rotationsgeschwindigkeiten, der im Rotor induzierte Strom seinerseits ein Reaktionsfeld induziert, welches üblicherweise als Anker-Reaktion bezeichnet wird. Das tatsächliche magnetische Feld, welches von den Leitern " gesehen " wird, ist entsprechend durch die Überlagerung des statischen magnetischen Feldes, wie es vom statischen äusseren Kern erzeugt wird, mit dieser Anker-Reaktion gegeben. Diese Überlagerung hat nicht mehr die gewünschte rechteckige Charakteristik, sondern ist vielmehr ver zerrt, was zu unausgeglichenen Strömen in den Leitern des Rotors und entsprechend zu Welligkeit und Spitzen im induzierten Spannungsmuster führt. Diese Welligkeit und Spitzen können insofern kritisch sein, als sie zu Spitzenlasten an den Dioden führen, welche zur Gleichrichtung des in den Leitern des Rotors induzierten Wechselstroms benutzt werden. Diese Spitzenlasten führen zu einer Überlastung der Dioden und am Ende zu einem Defekt/einer Öffnung der Dioden d.h. entsprechend zu Kurzschlüssen.

Die US 3,885,302 beschreibt eine dynamoelektrische Maschine mit einem Stator, wobei zwischen den 4 jeweils radial um ca. $\pi/4$ beabstandeten Polschuhen jeweils 4 radial versetzte Schlitze für Kompensationsspulen vorhanden sind. Als Läufer findet hier ein Rotor Anwendung mit einer Vielzahl von Schlitzen, konkret deren 36, in welche Leiter eingebettet zu sein scheinen.

Aus der FR-A-2410388 ist eine als Antriebsmotor oder Generator verwendbare elektrische Maschine bekannt, deren Stator mit einem Strom gespeiste Kompensationswicklungen aufweist. Die FR-A-1098945 betrifft einen elektrischen Generator, bei dem sich die Anzahl der auf dem Stator befindlichen Kompensationswicklungen von der Anzahl der Läuferwicklungen unterscheidet

DARSTELLUNG DER ERFINDUNG

Es ist entsprechend das Ziel der vorliegenden Erfindung, ein Verfahren zur Kompensation des durch einen Rotor induzierten Reaktionsfeldes vorzuschlagen, wobei der Rotor in einem statischen magnetischen Feld in einem statischen äusseren Kern rotiert, und wobei der Rotor wenigstens zwei, vorzugsweise aber eine Mehrzahl von im wesentlichen parallel zur Achse des Rotors angeordnete Leiter umfasst.

Dieses Ziel wird durch mit einem Verfahren erreicht, wie es im Anspruch 1 definiert ist, als auch mit einer elektrischen Maschine, welche die Merkmale von Anspruch8 aufweist. Die elektrische Maschine kann einen bürstenlosen Erreger nach Anspruch 15 aufweisen.

So ist es möglich, die Anker-Reaktion, welche ebenfalls statisch ist, zu kompensieren, unter Zuhilfenahme von einfachen Hilfswicklungen am statischen äusseren Kern und indem diese Hilfswicklungen mit einem Gleichstrom gespeist werden, so, dass das Reaktionsfeld kompensiert wird. Es ist derart möglich, das ideale homogene Feld, wie es durch die statischen Feldwicklungen (oder durch einen Permanentmagneten) erzeugt wird, und wie es vorliegt, wenn der Rotor nicht rotiert, durch die vorgeschlagene Topologie beinahe vollständig wiederherzustellen. Die Bauweise dieser Wicklungen kann zum Beispiel realisiert werden, indem einfache Stab-Technologie verwendet wird, welche eine billige und leichte Herstellung dieser Kompensationsmittel für die Anker-Reaktion erlaubt.

Die Geometrie der Hilfswicklungen ist also die Gleiche wie jene des Rotors. Es wurde nämlich festgestellt, dass die Anker-Reaktion, wie sie vom Rotor induziert wird, im wesentlichen durch die Geometrie der Leiter des Rotors sowie durch den durch diese Leiter fliessenden Strom bestimmt ist. Es ist entsprechend überraschend einfach möglich, durch entsprechende Anpassung der Geometrie der Hilfswicklungen an die Geometrie der Leiter des Rotors, unter Zuhilfenahme dieser Hilfswicklungen ein Feld der gleichen Geometrie zu erzeugen, wie die Geometrie der Anker-Reaktion, aber mit umgekehrtem Vorzeichen. Dieses Feld ist dann in der Lage die Anker-Reaktion in effizienter Weise zu kompensieren. Dazu werden die individuellen Leiter der Hilfswicklungen im wesentlichen gleichermassen mit einem Gleichstrom entgegengesetzter Richtung zur in den Leitern des Rotors bei dessen Rotation induzierten Richtung gespeist. Dies ist besonders nützlich, wenn es sich beim Rotor um einen Rotor eines Erregers umfassend Mittel zur Gleichrichtung des in den Leitern des Rotors induzierten Wechselstroms handelt, da in diesem Fall die Anker-Reaktion eine besonders schädliche Wirkung auf die Dioden haben kann.

Entsprechend einer ersten bevorzugten Ausführungsform der vorliegenden Erfindung sind die Hilfswicklungen im wesentlichen an der inneren Oberfläche des statischen äusseren Kerns angeordnet, und in der Region des Rotors sind die Hilfswicklungen im wesentlichen parallel zur Achse des Rotors orientiert. Die Anordnung der Hilfswicklungen so nah wie möglich beim Luftspalt stellt sicher, dass das Feld zur Kompensation der Anker-Reaktion tatsächlich im wesentlichen die gleiche Geometrie aufweist wie das Feld, welches von den Leitern des Rotors erzeugt wird. Je grösser die radiale Distanz zwischen den Leitern des Rotors und den Leitern der Hilfswicklungen ist, desto grösser sind die geometrischen Unterschiede zwischen den beiden Feldern und desto weniger perfekt ist die Kompensation der Anker-Reaktion.

Entsprechend einer weiteren bevorzugten Ausführungsform der Erfindung sind gleich viele individuelle Leiter der Hilfswicklungen vorhanden, wie Leiter am Rotor vorhanden sind, wobei diese individuellen Leiter der Hilfswicklungen gleichmässig über den Umfang des Luftspaltes verteilt sind. Insbesondere wenn der Rotor ebenfalls eine Bauweise aufweist, bei welcher die Leiter gleichmässig umlaufend über den Umfang verteilt sind, reproduziert eine solche Hilfswicklung beinahe in perfekter Weise die Geometrie der Anker-Reaktion und ist so in der Lage, eine sehr effiziente Kompensation sicherzustellen.

Die Regelung des durch die Leiter der Hilfswicklungen gespeisten Stromes kann durch eine Kontrolleinheit gewährleistet werden, welche Parameter wie Rotationsgeschwindigkeit, induzierter Gleichstrom/Gleichspannung im Rotor, und/oder Gleichstrom zur Induktion des statischen Feldes auf dem statischen äusseren Kern, dazu verwendet, den Strom zur Kompensation der Anker-Reaktion zu regeln. Insbesondere während Transienten, d.h. in Situationen, bei welchen das statische Feld erhöht oder reduziert wird (z.B. zur Kontrolle des Gleichstromes, welcher in den Rotor des Generators gespeist wird), kann der in den Leitern des Rotors fliessende Strom nicht vom Strom, welcher durch die Wicklung zur Induktion des statischen Feldes geschickt wird, oder vom Gleichstrom, welcher vom Rotor erzeugt wird, abgeleitet werden. Entsprechend einer anderen bevorzugten Ausführungsform der vorliegenden Erfindung wird deshalb vorgeschlagen, wenigstens einen Sensor zur Messung der Anker-Reaktion anzuordnen, und den durch die Hilfswicklungen gespeisten Strom in Abhängigkeit des durch diesen Sensor erzeugten Signals zu regeln. Diese Regelung erlaubt die Reduktion von Spitzenlasten an den Dioden und vermindert so das Risiko eines Defekts der Dioden.

Entsprechend einer anderen bevorzugten Ausführungsform ist der Sensor nur für Magnetfeldkomponeten in einer räumlichen Richtung empfindlich, aber nicht für Magnetfeldkomponenten senkrecht zu dieser Richtung. Dies kann zum Beispiel durch die Verwendung eines Hall-Sensors realisiert werden. Vorzugsweise ist der Sensor an einer Position angeordnet, wo das statische magnetische Feld, das von einer Feldwicklung oder von einem Permanentmagneten induziert wird, im wesentlichen senkrecht zu dieser empfindlichen Richtung des Sensors liegt. Der durch die Hilfswicklungen gespeiste Strom wird derart geregelt, dass das vom Sensor erzeugte Signal im wesentlichen einem nullwerten Reaktionsfeld an der Position des Sensors entspricht. Dazu wird der Sensor benachbart zur Feldwicklung in oder in der Nähe des Luftspaltes zwischen dem Rotor und dem statischen äusseren Kern angeordnet.

Weitere bevorzugte Ausführungsformen des Verfahrens nach der vorliegenden Erfindung sind in den abhängigen Ansprüchen beschrieben.

Ausserdem betrifft die vorliegende Erfindung eine elektrische Maschine mit einem statischen äusseren Kern für einen Rotor, insbesondere für einen so genannten Kurzschlusskäfig-Rotor (squirrel cage type rotor), welcher dadurch gekennzeichnet ist, dass ein Satz von Hilfswicklungen am statischen äusseren Kern angeordnet ist, wobei diese Hilfswicklungen mit einem Gleichstrom (DC) gespeist werden können, welcher das Reaktionsfeld kompensiert, welches vom Rotor induziert wird, wenn dieser im statischen äusseren Kern rotiert, wobei die Geometrie der Hilfswicklungen die gleiche wie jene des Rotors, das heisst, dass gleich viele individuelle Leiter der Hilfswicklungen, wie Leiter am Rotor vorhanden sind, und dass diese individuellen Leiter der Hilfswicklungen gleichmässig über den Umfang des Luftspaltes verteilt sind. Die individuellen Leiter der Hilfswicklungen sind wesentlichen gleichermassen mit einem Gleichstrom gespeist werden, dessen Richtung der Richtung des Stroms, welcher in den Leitern des Rotors bei dessen Rotation induziert wird, entgegengesetzt ist.

Entsprechend einer bevorzugten Ausführungsform des statischen äusseren Kerns nach der vorliegenden Erfindung wird das statische Feld durch wenigstens eine Feldwicklung induziert, welche mit einem Gleichstrom im Bereich von 1 bis 100 Ampere, vorzugsweise in einem Bereich von 5 bis 15 Ampere, gespeist wird, oder das bipolare statische Feld wird von einem Permanentmagneten erzeugt, wobei dann die Regelung des bipolaren statischen Feldes in diesem Fall durch eine Feldwicklung erreicht wird.

Weitere bevorzugte Ausführungsformen des statischen äusseren Kerns sind in den abhängigen Ansprüchen beschrieben.

Des weiteren betrifft die vorliegende Erfindung einen bürstenlosen Erreger zur Verwendung in einem synchronen Generator zur Speisung der Feldwicklung dessen Rotors, welcher dadurch gekennzeichnet ist, dass er einen statischen äusseren Kern umfasst, wie er oben beschrieben ist. Die Kompensation der Anker-Reaktion entsprechend der vorliegenden Erfindung erweist sich als besonders effizient im Falle der Verwendung eines Rotors für einen Erreger umfassend wenigstens zwei Leiterstäbe, welche im wesentlichen parallel zur Achse des Rotors angeordnet sind, wobei die Stäbe an ihrem ersten axialen Ende mit einem Kollektorring verbunden sind, und wobei die Stäbe an ihrem zweiten axialen Ende individuell mit zwei Ringen über Dioden mit umgekehrter Polarität verbunden sind, sodass der in den Leiterstäben infolge eines statischen Feldes induzierte Wechselstrom zu einem Gleichstrom (DC) in den beiden Ringen gewandelt wird. Vorzugsweise sind die Stäbe nahe an der radialen Oberfläche des Rotors angeordnet, vorzugsweise so nahe wie möglich beim Luftspalt zwischen dem Rotor und dem statischen äusseren Kern. Insbesondere im Fall von sogenannten Kurzschlusskäfig-Rotoren (squirrel cage type rotor) mit wenigstens 4 Leiterstäben, vorzugsweise wenigstens 8 Leiterstäben und besonders bevorzugt 16 Leiterstäben, welche alle gleichmässig um den Umfang des Rotors verteilt sind, kann die Kompensation effizient angewendet werden, da in diesem Fall die Geometrie der Anker-Reaktion durch derartige Hilfswicklungen im wesentlichen reproduziert und kompensiert werden kann. Dies ist insbesondere notwendig im Fall von Rotationsgeschwindigkeiten von 6000 bis 8000 Umdrehungen pro Minute, wobei ein Gleichstrom in den beiden Ringen von mehr als 2000 Ampere, vorzugsweise ein Gleichstrom von mehr als 10000 Ampere erzeugt wird.

Weitere bevorzugte Ausführungsformen des bürstenlosen Erregers sind in den abhängigen Ansprüchen beschrieben.

KURZE ERLÄUTERUNG DER FIGUREN

Eine umfassendere Würdigung der Erfindung und viele der damit verbundenen Vorteile werden ersichtlich, wenn die Erfindung unter Zuhilfenahme der nun folgenden detaillierten Beschreibung im Zusammenhang mit den zugehörigen Figuren weiter erläutert wird. Die Figuren zeigen:

Fig. 1    eine schematische Darstellung des statischen magnetischen Feldes (B) als Funktion des Umlaufwinkels Theta;

Fig. 2    a) einen schematischen Schnitt senkrecht zur Achse des Erregers durch einen Rotor nach der vorliegenden Erfindung;
b) schematisch die elektrische Konnektivität des Rotors;

Fig. 3    einen Schnitt entsprechend Fig. 2a), wobei die Anker-Reaktion bei Umdrehung des Rotors angedeutet ist; und

Fig. 4    einen Schnitt entsprechend Fig. 2a), wobei zusätzlich Mittel zur Kompensation der Anker-Reaktion auf dem statischen äusseren Kern angeordnet sind.

WEGE ZUR AUSFÜHRUNG DER ERFINDUNG

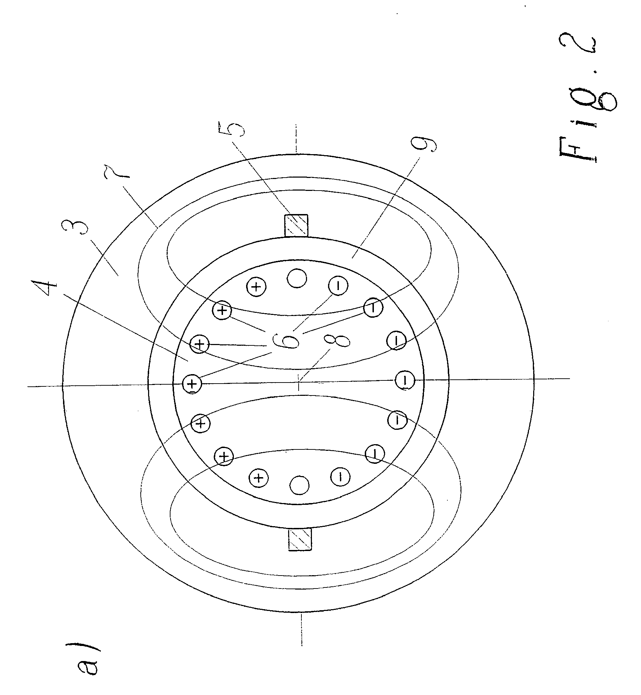

Fig. 2a) zeigt einen axialen Schnitt durch einen Erreger, welcher als bevorzugtes Ausführungsbeispiel dienen soll. Der Rotor 4 ist koaxial in einem statischen äusseren magnetischen Kern 3 gelagert, wobei dazwischen ein Luftspalt 9 verbleibt. Der statische äussere Kern 3 umfasst eine Feldwicklung 5, welche ein Magnetfeld induziert, wie es mit den Linien 7 angedeutet ist. In diesem Ausführungsbeispiel ist das induzierte magnetische Feld 7 bipolar, d.h. die Feldwicklung 5 wird mit einem positiven Strom auf der rechten Seite und mit einem negativen Strom auf der linken Seite oder umgekehrt in Fig. 2a) gespeist. Es ist aber auch möglich, zur Erzeugung eines derartigen bipolaren Feldes einen Permanentmagneten zu verwenden. Die Verwendung eines Permanentmagneten erlaubt es nicht, direkt den im Rotor induzierten Strom zu kontrollieren, was aber zur Kontrolle der Leistung des Generators notwendig ist. Deshalb wird üblicherweise, wenn Permanentmagneten verwendet werden, ausserdem eine Feldwicklung 5 angeordnet, welche dazu verwendet werden kann, das statische magnetische Hintergrund-Feld entweder zu erhöhen oder zu erniedrigen, indem die Feldwicklung mit einem entsprechenden Strom gespeist wird.

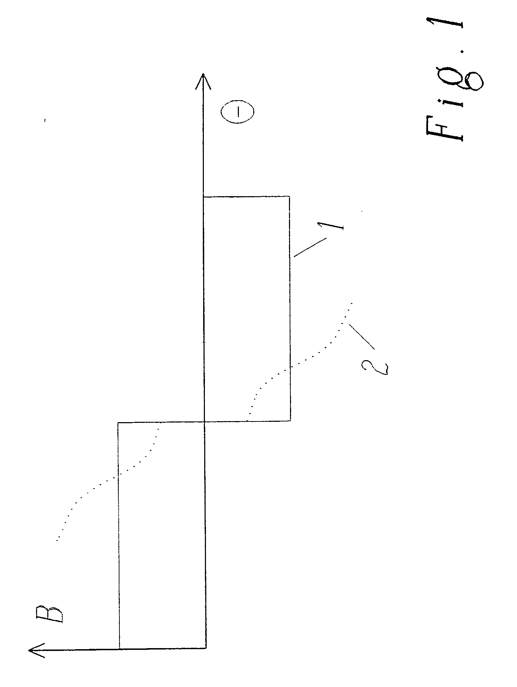

Das induzierte magnetische Feld 1, welches durch die Feldwicklung 5 induziert wird, ist schematisch in Fig. 1 als Funktion des Winkels Theta um die gemeinsame Achse 8 von Rotor 4 und äusserem statischem Kern 3 dargestellt. Das ideale magnetische Feld 1 zeigt eine rechteckige Charakteristik, wobei der Vorzeichenwechsel an jener Position angeordnet ist, wo Theta zur Feldwicklung 5 zeigt, d.h. horizontal in Fig. 2a).

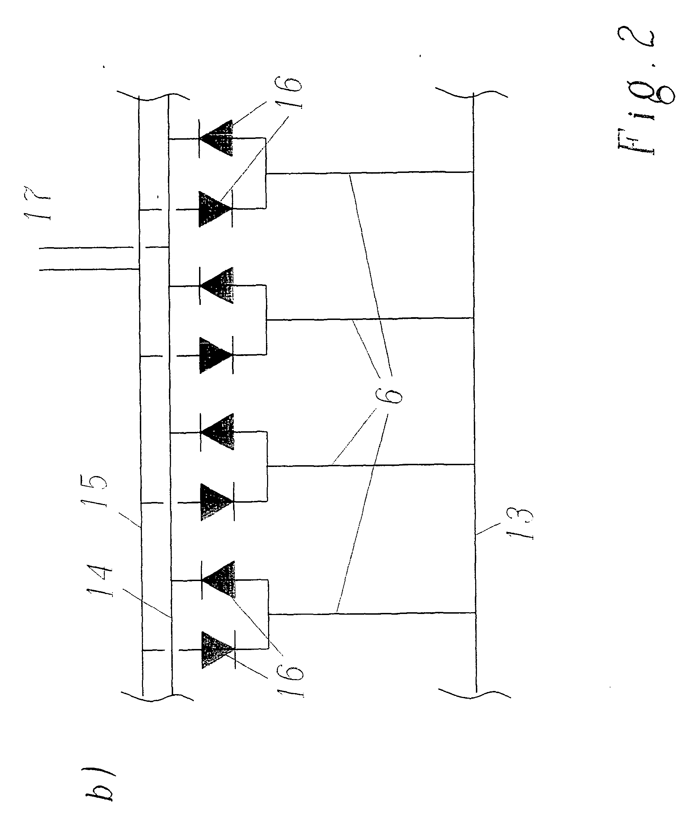

Wie in Fig. 2a) ersichtlich ist, sieht der rotierende Teil, d.h. der Rotor 4, aus wie ein Rotor einer Induktionsmaschine mit einem Kurzschlusskäfig-Rotor (so genannter squirrel cage type rotor). Auf der einen Seite sind alle Leiter, welche in diesem Fall als Stäbe 6 realisiert sind, mit einem Ring 13 (s. Fig. 2b)) verschweisst oder elektrisch verbunden. Der Ring 13 sammelt den Strom und leitet ihn zu den zurückführenden Stäben 6. Auf der anderen Seite ist jeder Stab 6 individuell mit zwei Ringen 14 und 15 über Dioden 16 mit umgekehrter Polarität verbunden. Diese zwei Ringe sind die Gleichstrompole. Alle Stäbe 6 sind identisch und sind gleichmässig um den Umfang des Rotors 4 verteilt. Die gekreuzten Dioden 16 führen zu einer Gleichrichtung des in den Stäben 6 bei Rotation des Rotors im statischen magnetischen Feld 7 induzierten Wechselstroms, was zu einem Gleichstrom (DC) in den beiden Ringen 14 und 15 führt. Der entsprechende Strom 17 kann anschliessend zur Speisung des Rotors des Generators verwendet werden.

Die Stäbe 6 sowie die Ringe 13, 14, 15 sind aus Kupfer oder Aluminium gefertigt. Bei einem Durchmesser des Rotors 4 von 600 Millimeter sind 50 Stäbe über den Umfang des Rotors 4 verteilt, wobei jeder der Stäbe 6 einen im wesentlichen kreisförmigen Querschnitt mit einem Durchmesser von 10 bis 15 Millimeter aufweist. Ein derartiger Rotor ist in der Lage, Rotationsgeschwindigkeiten von 4000 bis 8000 Umdrehungen pro Minute auszuhalten, und einen Gleichstrom im Bereich von 5000 bis 20000 Ampere zu erzeugen. Die erreichbaren Rotationsgeschwindigkeiten sind entsprechend mindestens zweimal so hoch wie die konventionellen Geschwindigkeiten, und die erreichbaren Ströme sind sogar 20 bis 30 mal höher als nach dem Stand der Technik. Die Ringe 13, 14, 15 sind kreisförmig ausgebildet, um den bei derartigen Rotationen auftretenden zentrifugalen Kräften widerstehen zu können. Die Stäbe 6 können direkt in entsprechende Schlitze im Rotor 4 gegossen werden, wobei die Schlitze vorzugsweise eine Form aufweisen, welche eine gute Fixierung der Stäbe in Bezug auf die zentrifugalen Kräfte erlaubt (z.B. Schwalbenschwänze). Eine andere Möglichkeit besteht darin, axiale Löcher im Rotor 4 vorzusehen, und die Stäbe 6 in diese Löcher aus axialer Richtung einzuschieben.

In einer derartigen Anordnung hat man eine grosse Anzahl von parallel gerichteten Dioden. Wenn eine Diode überlastet wird, wird sie ausfallen, was in einem permanenten Kurzschluss und einem totalen Ausfall resultiert. Es ist entsprechend wichtig, dass der Strom perfekt zwischen allen parallelen Pfaden balanciert ist.

Die interne Spannung V über eine bestimmte Diode ist die Summe der Schwellenspannung, V0, plus ein Beitrag, welcher proportional zum Strom ist:

$$V = V_0 + r_t I$$

Der innere Widerstand ist ziemlich schwach, und jedes Ungleichgewicht in der elektromotorischen Kraft würde in einer grossen Diskrepanz im Strom durch die parallelen Dioden resultieren.

Um eine im wesentlichen exakt gleiche elektromotorischen Kraft an jedem parallelen Stab des Kurzschlusskäfig-Rotors zu gewährleisten, sollte das Feld im Luftspalt so " rechteckig " wie möglich sein, wie dies in der Kurve 1 in Fig. 1 angegeben ist, und wie es durch die Feldwicklung 5 nach Fig. 2a) induziert wird.

Wenn im Kurzschlusskäfig-Rotor kein Strom fliesst, entspricht das Feld 7 der geforderten rechteckigen Form gut. Die Situation verschlechtert sich, sobald ein Strom im "squirrel cage " fliesst, d.h. in den Stäben 6, wie dies in Fig. 2a) durch die plus- und minus-Zeichen angegeben ist. Wenn der in den Stäben 6 fliessende Gleichstrom niedrig ist, wird er mehr oder weniger entsprechend der erzeugten Spannung verteilt sein.

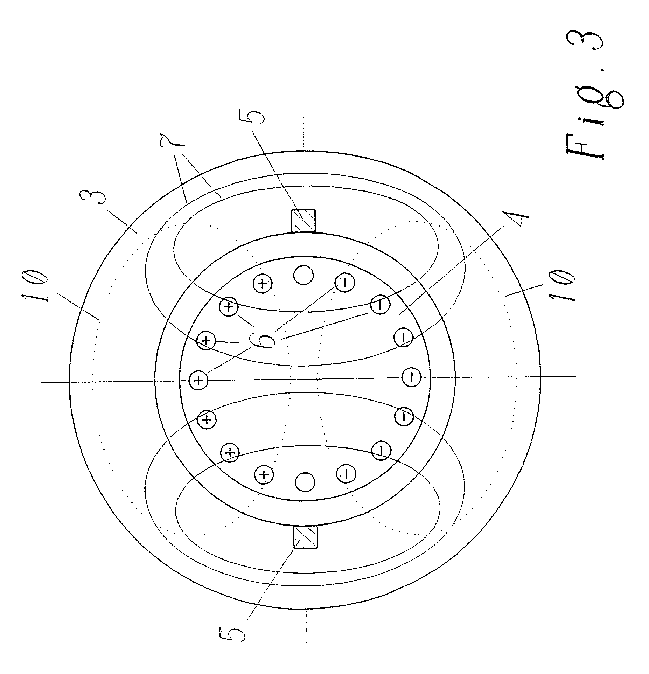

Das resultierende Flussmuster ist in Fig. 3 dargestellt. Es erzeugt eine Anker-Reaktion 10 mit einer 90 Grad Verschiebung, wie dies bei synchronen Maschinen üblich ist. Dieses Feld ist statisch, von konstanter Grösse und Richtung, und addiert sich zum Hauptfeld 7, wie es von der einzelnen Feldwicklung 5 erzeugt wird. Die Winkelverteilung des Feldes 10 entspricht mehr oder weniger einer Sinuskurve, während das induzierte Feld 7 rechteckig und 90 Grad ausser Phase ist. Wenn der Strom in den Stäben 6 zunimmt, nimmt auch die Anker-Reaktion 10 zu, was zu einer Deformation des magnetischen Feldes führt. Dies führt qualitativ zu einer Feldcharakteristik, wie sie durch die gepunktete Linie 2 in Fig. 1 angedeutet ist.

Die durch dieses deformierte Feld 2 erzeugte Spannung zeigt nicht mehr die erforderliche Rechteckform. Es resultiert in ein verzerrtes Spannungsmuster, was seinerseits zu einer zusätzlichen Verzerrung des Feldes führt (die sich mit der steren Verzerrung aufbaut). Am Ende dieses Prozesses resultiert diese Verzerrung in einem nicht tolerierbar hohen Wert des wiederholten Spitzenstroms in den Dioden, aber immer noch mit einem für die Dioden erträglichen Mittelwert. Früher oder später wird aber dennoch eine Diode ausfallen, was zu einer Kaskade von Ausfällen der anderen Dioden führt.

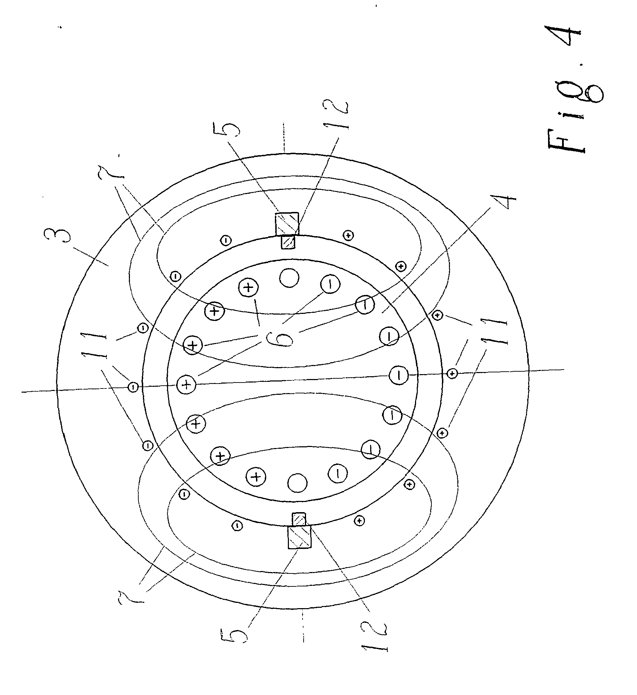

Entsprechend ist es vorteilhaft, bei einem derartigen Rotor 4 Mittel zur Kompensation der Anker-Reaktion 10 vorzusehen. Wie in Fig. 4 angedeutet, besteht die Idee nun darin, einfach eine Hilfswicklung 11 am statischen Teil 3 vorzusehen, um die Anker-Reaktion 10 zu kompensieren. Diese Hilfswicklungen 11 sollten einfach die gleiche Geometrie wie die Stäbe 6 des Rotors, d.h. des Kurzschlusskäfigs haben. Weil eine gleichmässige Verteilung des Stroms in den rotierenden Teilen erwünscht ist, muss die Anker-Reaktion 10 mit einer gleichmässigen Winkelverteilung von Strömen kompensiert werden. Die Hilfswicklungen 11 sollten einfach durch einen Gleichstrom der gleichen Amplitude in jedem Schlitz gespeist werden. Am einfachsten ist es, alle Hilfswicklungen 11 parallel anzuordnen, sodass die Leiter 11, welche auf einer Seite der Hauptwicklung angeordnet sind, Strom in einer Richtung führen, und die Leiter auf der anderen Seite Strom in der Gegenrichtung. Diese Situation ist in Fig. 4 durch plus- und minus-Zeichen, welche entgegengesetzt zu den Zeichen des Rotors 4 sind, angedeutet.

Insbesondere während Übergängen (Transienten) folgt der durch den Erreger 17 erzeugte Strom nicht genau der erzeugten Spannung. Derartige Übergänge liegen z.B. vor, wenn das induzierte Feld 7 erhöht oder erniedrigt wird, indem der Gleichstrom, welcher durch die statische Feldwicklung 5 zur Änderung des Gleichstroms 17 für den Rotor des Generators geführt wird, geändert wird, wodurch die Leistung des Generators geändert wird. Infolge von Sättigungseffekten und Windungsanordnung (Turn-Localization) kann der tatsächliche Strom, mit welchem die Hilfswicklungen 11 gespeist werden sollten, weder vom Strom durch die Wicklung 5 noch vom Ausgangsstrom 17 abgeleitet werden. Da die Anker-Reaktion 10 u.U. von der Einstellung des Erregers abhängt, und um eine Regelung zu ermöglichen, kann vorzugsweise der Strom durch die Hilfswicklungen 11 durch eine einfache Feldmessung im Luftspalt 9 bestimmt werden, z.B. bei der mittleren Winkelposition der Hauptwicklung 5, wo die Anker-Reaktion am stärksten ist und wo das Hauptfeld theoretisch null ist, insbesondere in einer Richtung senkrecht zur Ebene, welche durch die Hauptwicklung 5 definiert wird.

Die Feldmessung kann zum Beispiel durch einen Sensor 12 durchgeführt werden, wie dies in Fig. 4 angedeutet ist. Der Sensor kann zum Beispiel ein Hall-Sensor sein, wobei die Achse, bezüglich welcher der Sensor tatsächlich in der Lage ist, das magnetische Feld zu messen, senkrecht zur Achse liegt, welche durch die durch die statische Wicklung 5 definierte Ebene gegeben ist, und somit senkrecht zur Hauptrichtung des gewünschten statischen Hauptfelds 7 (d.h. horizontal in Fig. 4). Für maximale Empfindlichkeit des Sensors 12 sollte dessen empfindliche Achse parallel zur Hauptkomponente der Anker-Reaktion 10 orientiert sein.

Die gleiche Konfiguration und die gleichen Ausgleichsmittel können bei 4 Polen oder höheren Polzahlen verwendet werden. Die Hauptvorteile sind:

- Spannung/Stromverhältnisse Können geändertwerden, indem Pole in Serie geschaltet werden.

- Reduzierter Querschnitt des magnetischen Kerns.

- Kleinerer Querschnitt und geringere Längen der Endbereiche der Hauptwicklung, der Hilfswicklungen und des Kurzschlusskäfigs.

- Bessere Balance der magnetischen Kräfte.

Es gibt aber auch Nachteile, wenn mehr als ein Paar von Polen verwendet wird, zum Beispiel:

- Erhöhte Frequenz der Kommutierung der Dioden.

- Die Verbindungen der Ringe des Kurzschlusskäfigs müssen aufgeteilt werden. Die mechanische Realisierung zur Aufnahme der zentrifugalen Kräfte wird schwieriger und somit teurer.

Wie bereits oben erwähnt, kann zur Erzeugung des statischen Feldes 7 auch ein Permanentmagnet verwendet werden. Die Verwendung eines Permanentmagneten ist ziemlich einfach, weil er am statischen Teil 3 angeordnet ist und weil das gewünschte Feld rechteckig ist. Der Vorteil einer Verwendung von Permanentmagneten zur Erzeugung eines Hintergrund-Feldes (welches, wenn erforderlich, abgeschwächt oder erhöht werden kann durch eine zusätzliche Feldwicklung zur Erzeugung eines Offsets auf dem Hintergrundfeld, das vom Permanentmagneten erzeugt ist) ist, erstens, die Anker-Reaktion 10 zu reduzieren und so dessen Kompensation zu erleichtern. Die spezifische Geometrie eines derartigen Erregers erlaubt es, die Hauptwicklung 5 zu bewahren und diese nur dazu zu verwenden, ein Offset-Feld zu erzeugen. So kann zum Beispiel der Permanentmagnet dazu verwendet werden, das erforderliche Feld für den Nennstrom des Rotors des Generators zu erzeugen. Die Hauptspule 5 des Erregers wird anschliessend nur dazu verwendet, das magnetische Feld um vergleichsweise kleine Beträge zu erhöhen oder zu erniedrigen, um die Spannung des Generators zu regulieren. Die Spannung auf der Hauptwicklung wird entsprechend nur dann hoch sein, wenn keine Last anliegt oder wenn Überlast gefahren wird.

Zusammenfassend können folgende Vorteile der neuen Erreger-Topologie genannt werden:

- Kompaktheit: infolge der einfachen Endwicklungen.

- Robuste Wicklung: erlaubt sehr hohe periphere Geschwindigkeiten, und damit Erhöhung der B-Feld Nutzung (V=B.l.v: Erhöhung der Geschwindigkeit erlaubt es, kürzere Längen oder schwächere magnetische Felder zu haben).

- Günstige Herstellung: ähnlich einer Induktionsmaschine, Stabtechnologie.

- Sehr kurze Kommutationszeit infolge der niedrigen Induktion der Schleifen.

- Das Ende des Schaftes steht für andere Zwecke zur Verfügung.

- Die Verwendung von Dioden jeder Güte ist möglich, die individuellen Dioden müssen nicht zwingend für hohen Strom oder hohe Spannungen oder für hohe Geschwindigkeit ausgelegt sein.

- der Erreger kann vollständig in die Welle integriert werden. Dies ist von besonderem Interesse für Anordnungen mit doppelten Turbinen, wo auf beiden Seiten des Generators eine Turbine angeordnet ist, oder wenn ernsthafte Geschwindigkeitsprobleme auftreten.

BEZUGSZEICHENLISTE

1 ideales Feld im Luftspalt

2 ungefähres Feld im Luftspalt mit Anker-Reaktion

3 statischer äusserer Magnetkern

4 Rotor

5 Feldwicklung

6 Stäbe des "squirrel cage" Rotors (Kurzschlusskäfig-Rotor)

7 durch die Feldwicklung induziertes Feld

8 Achse des Rotors

9 Luftspalt

10 Anker-Reaktion

11 Hilfswicklung

12 Sensor

13 Kollektorring

14 erster Gleichstrom (DC)-Ring

15 zweiter Gleichstrom (DC)-Ring

16 Dioden

17 Gleichstrom vom Rotor zum Generator

**Patentansprüche**

1. Verfahren zur Kompensation des von einem Rotor (4) induzierten Reaktionsfeldes (10), bei welchem der Rotor (4) in einem statischen magnetischen Feld (7) in einem statischen äusseren Kern (3) rotiert, und bei welchem der Rotor (4) wenigstens zwei Leiter (6) umfasst, welche im wesentlichen parallel zur Achse (8) des Rotors (4) angeordnet sind, wobei es sich beim Rotor (4) um einen Kurzschlusskäfig-Rotor (4) handelt, und wobei ein Satz von Hilfswicklungen (11) am statischen äusseren Kern (3) angeordnet wird, und wobei diese Hilfswicklungen (11) mit einem Gleichstrom (DC) gespeist werden, welcher das Reaktionsfeld (10) kompensiert, **wobei** die Geometrie der Hilfswicklungen (11) die Gleiche ist wie jene des Rotors (4), das heisst, dass gleich viele individuelle Leiter der Hilfswicklungen (11) wie Leiter (6) am Rotor (4) vorhanden sind, und dass diese individuellen Leiter der Hilfswicklungen (11) gleichmässig über den Umfang des Luftspaltes (9) verteilt sind, und dass die einzelnen Leiter der Hilfswicklungen (11) im wesentlichen gleichermassen mit einem Gleichstrom gespeist werden, dessen Richtung der Richtung des Stroms, welcher in den Leitern (6) des Rotors (4) bei dessen Rotation induziert wird, entgegengesetzt ist.

2. Verfahren nach Anspruch 1, **dadurch gekennzeichnet, dass** es sich beim Rotor (4) um einen Rotor eines Erregers handelt, welcher Mittel zur Gleichrichtung des in den Leitern (6) des Rotors (4) induzierten Wechselstromes aufweist.

3. Verfahren nach einem der vorhergehenden Ansprüche, **dadurch gekennzeichnet, dass** die Hilfswicklungen (11) im wesentlichen an der inneren Oberfläche des statischen äusseren Kerns (3) angeordnet sind, und dass in der Region des Rotors (4) die Hilfswicklungen (11) im wesentlichen parallel zur Achse (8) des Rotors (4) angeordnet sind.

4. Verfahren nach einem der vorhergehenden Ansprüche, **dadurch gekennzeichnet, dass** wenigstens ein Sensor (12) zur Messung der Anker-Reaktion (10) vorhanden ist, und dass der durch die Hilfswicklungen (11) gespeiste Strom in Abhängigkeit des durch diesen Sensor (12) erzeugten Signals geregelt wird.

5. Verfahren nach Anspruch 4, **dadurch gekenn-**

**zeichnet, dass** der Sensor (12) nur für Magnetfeldkomponenten in einer räumlichen Richtung empfindlich ist aber nicht für Magnetfeldkomponenten senkrecht zu dieser Richtung, dass der Sensor (12) an einer Position angeordnet ist, wo das statische magnetische Feld (7), das von einer Feldwicklung (5) oder von einem Permanentmagneten induziert wird, im wesentlichen senkrecht zu dieser empfindlichen Richtung des Sensors (12) ist, und dass der durch die Hilfswicklungen (11) gespeiste Strom derart geregelt wird, dass das vom Sensor (12) erzeugte Signal im wesentlichen einem nullwerten Reaktionsfeld (10) an der Position des Sensors (12) entspricht.

6. Verfahren nach einem der Ansprüche 4 oder 5, **dadurch gekennzeichnet, dass** der Sensor (12) benachbart zur Feldwicklung (5) in oder in der Nähe des Luftspaltes (9) zwischen dem Rotor (4) und dem statischen äusseren Kern (3) angeordnet ist.

7. Verfahren nach einem der vorhergehenden Ansprüche, **dadurch gekennzeichnet, dass** der Kurzschlusskäfig-Rotor wenigstens 4 Leiterstäbe, vorzugsweise wenigstens 8 Leiterstäbe und besonders bevorzugt 16 Leiterstäbe aufweist, welche alle gleichmässig um den Umfang des Rotors verteilt sind.

8. Elektrische Maschine mit einem statischen äusseren Kern (3) und einem Kurzschlusskäfig-Rotor (4), wobei der Rotor (4) wenigstens zwie Leiter (6) umfasst, welche im wesentlichen parallel zur Achse (8) des Rotors (4) angeordnet sind und wobei ein Satz von Hilfswicklungen (11) am statischen äusseren Kern (3) angeordnet ist, und wobei diese Hilfswicklungen (11) am statischen äusseren Kern (3) angeordnet ist, und wobei diese Hilfswicklungen (11) mit einem Gleichstrom (DC) gespeist werden können, welcher das Reaktionsfeld (10) kompensiert, welches vom Rotor (4) induziert wird, wenn dieser im statischen äusseren Kern (3) rotiert, wobei die Geometrie der Hilfswicklungen (11) die Gleiche ist wie jene des Rotors (4), das heisst, dass gleich viele individuelle Leiter der Hilfswicklungen (11), wie Leiter (6) am Rotor (4) vorhanden sind, und dass diese individuellen Leiter der Hilfswicklungen (11) gleichmässig über den Umfang des Luftspaltes (9) verteilt sind, und dass die einzelnen Leiter der Hilfswicklungen (11) im wesentlichen gleichermassen mit einem Gleichstrom gespeist werden können, dessen Richtung der Richtung des Stroms, welcher in den Leitern (6) des Rotors (4) bei dessen Rotation induziert wird, entgegengesetzt ist.

9. Elektrische Maschine mit einem statischen äusseren Kern (3) und einem Kurzschlusskäfig-Rotor (4) nach Anspruch 8, bei welcher es sich beim Rotor (4) um einen Rotor eines Erregers handelt, welcher Mittel zur Gleichrichtung des in den Leitern (6) des Rotors (4) induzierten Wechselstromes aufweist, wobei vorzugsweise die Hilfswicklungen (11) im wesentlichen an der inneren Oberfläche des statischen äusseren Kerns (3) angeordnet sind, und wobei in der Region des Rotors (4) die Hilfswicklungen (11) im wesentlichen parallel zur Achse (8) des Rotors (4) angeordnet sind.

10. Elektrische Maschine mit einem statischen äusseren Kern (3) und einem Kurzschlusskäfig-Rotor (4) nach einem der Ansprüche 8 oder 9, bei welcher die Hilfswicklungen (11) eine gleiche Anzahl von individuellen Leitern umfassen, wie die Anzahl der Leiter (6) des Rotors (4), und dass diese individuellen Leiter der Hilfswicklungen (11) gleichmässig über den Umfang des Luftspaltes (9) verteilt sind.

11. Elektrische Maschine mit einem statischen äusseren Kern (3) und einem Kurzschlusskäfig-Rotor (4) nach einem der Ansprüche 8 bis 10, bei welcher wenigstens ein Sensor (12) zur Messung des Reaktionsfeldes (10) vorhanden ist, und dass der durch die Hilfswicklungen (11) gespeiste Strom in Abhängigkeit des durch den Sensor (12) erzeugten Signals geregelt wird, wobei vorzugsweise der Sensor (12) nur in einer räumlichen Richtung für Magnetfeldkomponenten empfindlich ist, und nicht für Magnetfeldkomponenten senkrecht zu dieser empfindlichen Richtung, und dass insbesondere bevorzugt der Sensor (12) an einem Ort positioniert ist, bei welchem das durch eine Feldwicklung (5) erzeugte statische magnetische Feld (7) im wesentlichen senkrecht zur empfindlichen Richtung des Sensors (12) verläuft.

12. Elektrische Maschine mit einem statischen äusseren Kern (3) und einem Kurzschlusskäfig-Rotor (4) nach Anspruch 11, bei welcher der Sensor (12) benachbart zur Feldwicklung (5) in oder nahe beim Luftspalt (9) zwischen dem Rotor (4) und dem statischen äusseren Kern (3) angeordnet ist.

13. Elektrische Maschine mit einem statischen äusseren Kern (3) und einem Kurzschlusskäfig-Rotor (4) Ansprüche 8 bis 12, bei welcher das statische Feld (7) durch wenigstens eine Feldwicklung (5) induziert wird, welche mit einem Gleichstrom im Bereich von 1 bis 100 Ampere, vorzugsweise in einem Bereich von 5 bis 15 Ampere, gespeist wird, oder dass das bipolare statische Feld (7) von einem Permanentmagneten erzeugt wird, und dass die Regelung des bipolaren statischen Feldes (7) in diesem Fall durch eine Feldwicklung (5) erreicht wird.

14. Bürstenloser Erreger zur Verwendung in einem synchronen Generator zur Speisung der Feldwicklung dessen Rotors, **dadurch gekennzeichnet, dass** er einen statischen äusseren Kern (3) nach einem der Ansprüche 8 bis 12 umfasst.

15. Bürstenloser Erreger nach Anspruch 14, **dadurch gekennzeichnet, dass** er einen Rotor (4) umfasst, welcher wenigstens zwei Leiterstäbe (6) aufweist, welche im wesentlichen parallel zur Achse (8) des Rotors (4) angeordnet sind, dass die Stäbe (6) an ihrem ersten axialen Ende mit einem Kollektorring (13) verbunden sind, und dass die Stäbe (6) an ihrem zweiten axialen Ende individuell mit zwei Ringen (14, 15) über Dioden (16) mit umgekehrter Polarität verbunden sind, sodass der in den Leiterstäben (6) infolge eines statischen Feldes (7) induzierte Wechselstrom in den beiden Ringen (14, 15) zu einem Gleichstrom (DC) umgewandelt wird.

16. Bürstenloser Erreger nach Anspruch 15, **dadurch gekennzeichnet, dass** der Kollektorring (13) umlaufend ist, und dass vorzugsweise auch die beiden Ringe (14, 15) umlaufend sind.

17. Bürstenloser Erreger nach einem der Ansprüche 15 oder 16, **dadurch gekennzeichnet, dass** die Stäbe (6) nahe an der radialen Oberfläche des Rotors (4) angeordnet sind, vorzugsweise so nahe wie möglich beim Luftspalt (9) zwischen dem Rotor (4) und dem äusseren statischen Kern (3).

18. Bürstenloser Erreger nach einem der Ansprüche 15 bis 17, **dadurch gekennzeichnet, dass** wenigstens 4 Leiterstäbe (6), vorzugsweise wenigstens 8 Leiterstäbe (6) und besonders bevorzugt 16 Leiterstäbe (6) vorhanden sind, welche alle gleichmässig um den Umfang des Rotors (4) verteilt sind.

19. Bürstenloser Erreger nach einem der Ansprüche 15 bis 18, **dadurch gekennzeichnet, dass** er bei einer Rotationsgeschwindigkeit von 6000 bis 8000 betrieben werden kann, wobei ein Gleichstrom in den beiden Ringen (14, 15) von mehr als 2000 Ampere, vorzugsweise ein Gleichstrom von mehr als 10000 Ampere erzeugt wird.

20. Bürstenloser Erreger nach einem der Ansprüche 16 bis 19, **dadurch gekennzeichnet, dass** der Kurzschlusskäfig-Rotor wenigstens 4 Leiterstäbe, vorzugsweise wenigstens 8 Leiterstäbe und besonders bevorzugt 16 Leiterstäbe aufweist, welche alle gleichmässig um den Umfang des Rotors verteilt sind.

**Claims**

1. Method for compensating the reaction field (10) induced by a rotor (4), in which method the rotor (4) rotates in a static magnetic field (7) in a static outer core (3), and in which method the rotor (4) comprises at least two conductors (6), which are arranged substantially parallel to the axis (8) of the rotor (4), the rotor (4) being a squirrel cage type rotor (4), and a set of auxiliary windings (11) being arranged on the static outer core (3), and these auxiliary windings (11) being fed a direct current (DC) which compensates the reaction field (10), wherein the geometry of the auxiliary windings (11) is the same as that of the rotor (4), i.e. the same number of individual conductors of the auxiliary windings (11) are provided as conductors (6) on the rotor (4), and these individual conductors of the auxiliary windings (11) are distributed uniformly over the circumference of the air gap (9), and the individual conductors of the auxiliary windings (11) are fed a direct current substantially to the same extent, the direction of said direct current being opposite to the direction of the current which is induced in the conductors (6) of the rotor (4) when the latter rotates.

2. Method according to Claim 1, **characterized in that** the rotor (4) is a rotor of an exciter, which has means for rectifying the alternating current induced in the conductors (6) of the rotor (4).

3. Method according to one of the preceding claims, **characterized in that** the auxiliary windings (11) are arranged substantially on the inner surface of the static outer core (3), and **in that** the auxiliary windings (11) are arranged substantially parallel to the axis (8) of the rotor (4) in the region of the rotor (4).

4. Method according to the one of the preceding claims, **characterized in that** at least one sensor (12) for measuring the armature reaction (10) is provided, and **in that** the current fed through the auxiliary windings (11) is regulated as a function of the signal produced by this sensor (12).

5. Method according to Claim 4, **characterized in that** the sensor (12) is only sensitive to magnetic field components in a three-dimensional direction, but not to magnetic field components perpendicular to this direction, **in that** the sensor (12) is arranged at a position where the static magnetic field (7), which is induced by a field winding (5) or by a permanent magnet, is substantially perpendicular to this sensitive direction of the sensor (12), and **in that** the current fed through the auxiliary windings (11) is regulated in such a way that the signal produced by the sensor (12) substantially corresponds to a zero-value reaction field (10) and the position of the sensor (12).

6. Method according to either of Claims 4 and 5, **characterized in that** the sensor (12) is arranged adjacent to the field winding (5) in or in the vicinity of the air gap (9) between the rotor (4) and the static outer core (3).

7. Method according to the one of the preceding claims, **characterized in that** the squirrel cage type rotor has at least four conductor bars, preferably at least eight conductor bars and particularly preferably sixteen conductor bars, which are all distributed uniformly around the circumference of the rotor.

8. Electrical machine with a static outer core (3) and a squirrel cage type rotor (4), the rotor (4) comprising at least two conductors (6), which are arranged substantially parallel to the axis (8) of the rotor (4), and a set of auxiliary windings (11) being arranged on the static outer core (3), and these auxiliary windings (11) being arranged on the static outer core (3), and these auxiliary windings (11) being capable of being fed a direct current (DC), which compensate the reaction field (10) which is induced by the rotor (4) if the latter is rotating in the static outer core (3), the geometry of the auxiliary windings (11) being the same as that of the rotor (4), i.e. the same number of individual conductors of the auxiliary windings (11) are provided as conductors (6) on the rotor (4) and these individual conductors of the auxiliary windings (11) are distributed uniformly over the circumference of the air gap (9), and the individual conductors of the auxiliary windings (11) can be fed a direct current substantially to the same extent, the direction of said direct current being opposite to the direction of the current which is induced in the conductors (6) of the rotor (4) when the latter rotates.

9. Electrical machine with a static outer core (3) and a squirrel cage type rotor (4) according to Claim 8, in which machine the rotor (4) is a rotor of an exciter, which has means for rectifying the alternating current induced in the conductors (6) of the rotor (4), preferably the auxiliary windings (11) being arranged substantially on the inner surface of the static outer core (3), and the auxiliary windings (11) being arranged substantially parallel to the axis (8) of the rotor (4), in the region of the rotor (4).

10. Electrical machine with a static outer core (3) and a squirrel cage type rotor (4) according to either of Claims 8 and 9, in which machine the auxiliary windings (11) comprise an identical number of individual conductors to the number of conductors (6) of the rotor (4), and these individual conductors of the auxiliary windings (11) are distributed uniformly over the circumference of the air gap (9).

11. Electrical machine with a static outer core (3) and a squirrel cage type rotor (4) according to one of Claims 8 to 10, in which machine at least one sensor (12) for measuring the reaction field (10) is provided, and the current fed through the auxiliary windings (11) is regulated as a function of the signal produced by the sensor (12), preferably the sensor (12) only being sensitive to magnetic field components in a three-dimensional direction, and not to magnetic field components perpendicular to this sensitive direction, and particularly preferably the sensor (12) is positioned at a location in which the static magnetic field (7) produced by a field winding (5) runs substantially perpendicular to the sensitive direction of the sensor (12).

12. Electrical machine with a static outer core (3) and a squirrel cage type rotor (4) according to Claim 11, in which machine the sensor (12) is arranged adjacent to the field winding (5) in or close to the air gap (9) between the rotor (4) and the static outer core (3).

13. Electrical machine with a static outer core (3) and a squirrel cage type rotor (4) Claims 8 to 12, in which machine the static field (7) is induced by at least one field winding (5), which is fed a direct current in the range of from 1 to 100 amperes, preferably in a range of from 5 to 15 amperes, or the bipolar static field (7) is produced by a permanent magnet, and the regulation of the bipolar static field (7) is in this case achieved by a field winding (5).

14. Brushless exciter for use in a synchronous generator for feeding the field winding of its rotor, **characterized in that** it comprises a static outer core (3) according to one of Claims 8 to 12.

15. Brushless exciter according to Claim 14, **characterized in that** it comprises a rotor (4), which has at least two conductor bars (6), which are arranged substantially parallel to the axis (8) of the rotor (4), **in that** the bars (6) are connected at their first axial end to a collector ring (13), and **in that** the bars (6) are connected at their second axial end individually to two rings (14, 15) via diodes (16) with reversed polarity, with the result that the alternating current induced in the conductor bars (6) as a result of a static field (6) is converted in the two rings (14, 15) into a direct current (DC).

16. Brushless exciter according to Claim 15, **characterized in that** the collector ring (13) is revolving, and **in that** preferably also the two rings (14, 15 are revolving.

17. Brushless exciter according to either of Claims 15 and 16, **characterized in that** the bars (6) are arranged close to the radial surface of the rotor (4), preferably as close as possible to the air gap (9) between the rotor (4) and the outer static core (3).

18. Brushless exciter according to one of Claims 15 to 17, **characterized in that** at least four conductor bars (6), preferably at least conductor bars (6) and particularly preferably sixteen conductor bars (6) are provided, which are all distributed uniformly around the circumference of the rotor (4).

19. Brushless exciter according to one of Claims 15 to 18, **characterized in that** it can be operated at a rotation speed of from 6000 to 8000, a direct current in the two rings (14, 15) of more than 2000 amperes, preferably a direct current of more than 10000 amperes being produced.

20. Brushless exciter according to one of Claims 16 to 19, **characterized in that** the squirrel cage type rotor has at least four conductor bars, preferably at least eight conductor bars and particularly preferably sixteen conductor bars, which are all distributed uniformly around the circumference of the rotor.

**Revendications**

1. Procédé de compensation du champ réactif (10) induit par un rotor (4), dans lequel le rotor (4) tourne dans un champ magnétique statique (7) à l'intérieur d'une âme extérieure statique (3) le rotor (4) comprenant au moins deux conducteurs (6) disposés essentiellement en parallèle à l'axe (8) du rotor (4), le rotor (4) étant un rotor (4) à cage en court-circuit, un jeu d'enroulements auxiliaires (11) étant disposé sur l'âme extérieure statique (3), ces enroulements auxiliaires (11) étant alimentés en courant continu (DC) pour compenser le champ réactif (10), **caractérisé en ce que** la géométrie des enroulements auxiliaires (11) est identique à celle du rotor (4), c'est-à-dire que les enroulements auxiliaires (11) contiennent le même nombre de conducteurs individuels que celui des conducteurs (6) installés sur le rotor (4), **en ce que** ces conducteurs individuels des enroulements auxiliaires (11) sont répartis régulièrement à la périphérie de l'entrefer (9) et **en ce que** les conducteurs individuels des enroulements auxiliaires (11) sont alimentés de manière essentiellement identique en un courant continu dont la direction est opposée à la direction du courant induit dans les conducteurs (6) du rotor (4) lorsque ce dernier tourne.

2. Procédé selon la revendication 1, **caractérisé en ce que** le rotor (4) est le rotor d'un excitateur qui présente des moyens de redressement du courant alternatif induit dans les conducteurs (6) du rotor (4).

3. Procédé selon l'une des revendications précédentes, **caractérisé en ce que** les enroulements auxiliaires (11) sont disposés essentiellement sur la surface intérieure de l'âme extérieure statique (3) et **en ce que** dans la zone du rotor (4), les enroulements auxiliaires (11) sont disposés essentiellement en parallèle à l'axe (8) du rotor (4).

4. Procédé selon l'une des revendications précédentes, **caractérisé en ce qu'**au moins un détecteur (12) de mesure de la réaction d'induit (10) est prévu et **en ce que** le courant délivré par les enroulements auxiliaires (11) est régulé en fonction du signal délivré par ce détecteur (12).

5. Procédé selon la revendication 4, **caractérisé en ce que** le détecteur (12) est sensible uniquement aux composantes du champ magnétique orientées dans une direction de l'espace mais n'est pas sensible aux composantes du champ magnétique perpendiculaires à cette direction, **en ce que** le détecteur (12) est disposé en un emplacement où le champ magnétique statique (7) induit par un enroulement (5) de création de champ ou par un aimant permanent est essentiellement perpendiculaire à cette direction de sensibilité du détecteur (12) et **en ce que** le courant délivré par les enroulements auxiliaires (11) est régulé de telle sorte que le signal délivré par le détecteur (12) correspond essentiellement à un champ réactif (10) de valeur nulle à l'emplacement du détecteur (12).

6. Procédé selon l'une des revendications 4 ou 5, **caractérisé en ce que** le détecteur (12) est disposé au voisinage de l'enroulement (5) de création de champ ou à proximité de l'entrefer (9) situé entre le rotor (4) et l'âme extérieure statique (3).

7. Procédé selon l'une des revendications précédentes, **caractérisé en ce que** le rotor à cage en court-circuit présente au moins 4 barreaux conducteurs, de préférence au moins 8 barreaux conducteurs et de façon particulièrement préférable 16 barreaux conducteurs, tous répartis régulièrement à la périphérie du rotor.

8. Machine électrique dotée d'une âme extérieure statique (3) et d'un rotor (4) à cage en court-circuit, le rotor (4) comprenant au moins deux conducteurs (6) disposés essentiellement en parallèle à l'axe (8) du rotor (4), un jeu d'enroulements auxiliaires (11) étant disposé sur l'âme extérieure statique (3) et ces enroulements auxiliaires (11) étant disposés sur l'âme extérieure statique (3), ces enroulements auxiliaires (11) pouvant être alimentés en un courant continu (DC) qui compense le champ réactif (10) induit par le rotor (4) lorsque ce dernier tourne dans l'âme extérieure statique (3), **caractérisé en ce que** la géométrie des enroulements auxiliaires (11) est identique à celle du rotor (4), c'est-à-dire que les enroulements auxiliaires (11) contiennent le même nombre de conducteurs individuels que celui des conducteurs (6) installés sur le rotor (4), **en ce que** ces conducteurs individuels des enroulements auxiliaires (11) sont répartis régulièrement à la périphérie de l'entrefer (9) et **en ce que** les conducteurs individuels des enroulements auxiliaires (11) peuvent être alimentés de manière essentiellement identique en un courant continu dont la direction est opposée à la direction du courant induit dans les conducteurs (6) du rotor (4) lorsque ce dernier tourne.

9. Machine électrique dotée d'une âme extérieure statique (3) et d'un rotor (4) à cage en court-circuit selon la revendication 8, dans laquelle le rotor (4) est le rotor d'un excitateur qui présente des moyens de redressement du courant alternatif induit dans les conducteurs (6) du rotor (4), les enroulements auxiliaires (11) étant de préférence disposés essentiellement sur la surface intérieure de l'âme extérieure statique (3) et dans la zone du rotor (4), les enroulements auxiliaires (11) étant disposés essentiellement en parallèle à l'axe (8) du rotor (4).

10. Machine électrique dotée d'une âme extérieure statique (3) et d'un rotor (4) à cage en court-circuit selon l'une des revendications 8 ou 9, **caractérisée en ce que** les enroulements auxiliaires (11) comprennent un nombre de conducteurs individuels égal au nombre des conducteurs (6) du rotor (4) et **en ce que** ces différents conducteurs des enroulements auxiliaires (11) sont répartis régulièrement à la périphérie de l'entrefer (9).

11. Machine électrique dotée d'une âme extérieure statique (3) et d'un rotor (4) à cage en court-circuit selon l'une des revendications 8 à 10, **caractérisée en ce qu'**au moins un détecteur (12) de mesure de la réaction d'induit (10) est prévu et **en ce que** le courant délivré par les enroulements auxiliaires (11) est régulé en fonction du signal délivré par ce détecteur (12), le détecteur (12) étant de préférence sensible aux composantes du champ magnétique orientées dans une direction de l'espace et n'est pas sensible aux composantes du champ magnétique perpendiculaires à cette direction de sensibilité, et **en ce que** de manière particulièrement préférable, le détecteur (12) est placé en un emplacement auquel le champ magnétique statique (7) délivré par un enroulement (5) de création de champ s'étend essentiellement à la perpendiculaire de la direction de sensibilité du détecteur (12).

12. Machine électrique dotée d'une âme extérieure statique (3) et d'un rotor (4) à cage en court-circuit selon la revendication 11, **caractérisée en ce que** le détecteur (12) est disposé au voisinage de l'enroulement (5) de création de champ ou à proximité de l'entrefer (9) entre le rotor (4) et l'âme extérieure statique (3).

13. Machine électrique dotée d'une âme extérieure statique (3) et d'un rotor (4) à cage en court-circuit selon les revendications 8 à 12, **caractérisée en ce que** le champ statique (7) est induit par au moins un enroulement (5) de création de champ alimenté en un courant continu de l'ordre de 1 à 100 Ampère et de préférence de l'ordre de 5 à 15 Ampère, ou **en ce que** le champ statique bipolaire (7) est créé par un aimant permanent et **en ce que** la régulation du champ statique bipolaire (7) est dans ce cas obtenue à l'aide d'un enroulement (5) de création de champ.

14. Excitateur sans balai destiné à être utilisé dans un générateur synchrone pour l'alimentation de l'enroulement de création de champ du rotor, **caractérisé en ce qu'**il comprend une âme extérieure statique (3) selon l'une des revendications 8 à 12.

15. Excitateur sans balai selon la revendication 14, **caractérisé en ce qu'**il comprend un rotor (4) qui présente au moins deux barreaux conducteurs (6) disposés essentiellement en parallèle à l'axe (8) du rotor (4), **en ce que** les barreaux (6) sont reliés à une bague collectrice (13) par leur première extrémité axiale, **en ce que** les barreaux (6) sont reliés séparément par leur deuxième extrémité axiale à deux bagues (14, 15) par l'intermédiaire de diodes (16) à polarité opposée, de telle sorte que le courant alternative induit dans les barreaux conducteurs (6) suite à la présence d'un champ statique (7) est converti en un courant continu (DC) dans les deux bagues (14, 15).

16. Excitateur sans balai selon la revendication 15, **caractérisé en ce que** la bague collectrice (13) est fermée et **en ce que** de préférence les deux bagues (14, 15) sont également fermées.

17. Excitateur sans balai selon l'une des revendications 15 ou 16, **caractérisé en ce que** les barreaux (16) sont disposés à proximité de la surface radiale du rotor (4) de préférence aussi près que possible de l'entrefer (9) entre le rotor (4) et l'âme statique extérieure (3).

18. Excitateur sans balai selon l'une des revendications 15 à 17, **caractérisé en ce qu'**au moins 4 barreaux conducteurs (6), de préférence au moins 8 barreaux conducteurs (6) et de manière particulièrement préférable 16 barreaux conducteurs (6) sont prévus et sont tous répartis régulièrement à la périphérie du rotor (4).

19. Excitateur sans balai selon l'une des revendications 15 à 18, **caractérisé en ce qu'**il peut fonctionner à une vitesse de rotation de 6 000 à 8 000, un courant continu de plus de 2 000 Ampère et de préférence de plus de 10 000 Ampère étant produit dans les deux bagues (14, 15).

**20.** Excitateur sans balai selon l'une des revendications 16 à 19, **caractérisé en ce que** le rotor à cage en court-circuit présente au moins 4 barreaux conducteurs, de préférence au moins 8 barreaux conducteurs et de façon particulièrement préférable 16 barreaux conducteurs qui sont tous répartis régulièrement à la périphérie du rotor.

Fig.1

EP 1 443 631 B1

Fig. 2

a)

b)

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3885302 A
- FR 2410388 A
- FR 1098945 A